Europäisches Patentamt

European Patent Office

Office européen des brevets

(11) Publication number: **0 281 852 B1**

## (12) EUROPEAN PATENT SPECIFICATION

(45) Date of publication of patent specification: **07.10.92** (51) Int. Cl.5: **F02C 3/26**, //F01D25/32

(21) Application number: **88102743.7**

(22) Date of filing: **24.02.88**

(54) **Coal fired gas turbine.**

(30) Priority: **13.03.87 JP 56918/87**

(43) Date of publication of application:
**14.09.88 Bulletin 88/37**

(45) Publication of the grant of the patent:
**07.10.92 Bulletin 92/41**

(84) Designated Contracting States:
**CH DE FR GB IT LI**

(56) References cited:
**US-A- 2 651 176**
**US-A- 2 770 947**

(73) Proprietor: **MITSUBISHI JUKOGYO KABUSHIKI KAISHA**
**5-1, Marunouchi 2-chome Chiyoda-ku**
**Tokyo 100(JP)**

(72) Inventor: **Ishihara, Takao c/o Mitsubishi Jukogyo K.K.**
**5-1, Marunouchi 2-chome Chiyoda-ku**
**Tokyo(JP)**

(74) Representative: **Henkel, Feiler, Hänzel & Partner**
**Möhlstrasse 37**
**W-8000 München 80(DE)**

EP 0 281 852 B1

Rank Xerox (UK) Business Services

**Description**

**BACKGROUND OF THE INVENTION:**

Field of the invention:

The present invention relates to a coal fired gas turbine comprising the features of the pre-characterizing portion of claim 1, and the invention is utilized in the technical field for making it possible to use solid fuel such as coal, especially fine powder coal.

Description of the Prior Art:

Heretofore, a gas turbine made use of clean fuel such as LNG, gas oil, and the like, and solid fuel such as coal and the like could not be used in a gas turbine because it contains a large proportion of ash content.

In the case where coal is to be used as fuel for a gas turbine in the prior art, the so-called coal gasificating combined power plant in which coal is gasificated in a gasificating furnace and the produced gas fuel is introduced to a gas turbine, was known, but in this method the system became complexed and very expensive, the techniques of dust removal at a high temperature, desulfurization and denitrification were all under development, and so, this method has not yet put in practical use perfectly. The most serious bar to continuous operation of a gas turbine was the problem of fouling and blocking by an ash content in coal.

With regard to desulfurization and denitrification, the technique of enabling the processing even at a low temperature state after exhaust from a gas turbine has been widely put in practical use.

US-A-2 770 947 a coal fired gas turbine is disclosed with the features of the pre-characterizing portion of claim 1. In this prior art, the compressor, slagging combustor, dust separator, gas turbine, etc. are respectively conceived as independent components and are communicated with each other through pipes and ducts. This results in a space-consuming overall arrangement of the components.

Moreover, this prior art gas turbine employs the dust separator of the impact separation type. However, the dust separator of this type is limited in its dust separating capability, and usually is not capable of removing the dust contained in the combustion gas up to the extent of being allowed to be introduced into the gas turbine, because the particles contained therein are so small that sufficient removing capability cannot be secured.

SUMMARY OF THE INVENTION:

It is therefore one object of the present invention to provide an improved coal fired gas turbine which has an enhanced working efficiency and whose manufacturing cost is greatly reduced.

To achieve the above object, the subject-matter as described above further comprises the features of the characterizing portion of claim 1.

According to the present invention, coal fuel such as pulverized coal, CWM, etc., is directly subjected to heavy load combustion in a slagging combustor (coal fired furnace), thereby 80 - 90% of an ash content in coal is derived in a molten state, furthermore 10 - 20% of the ash content in a mist state contained in the combustion gas is removed by a rotary type mist separator, a ceramic filter or the like before the combustion gas enters the gas turbine, and thus continuous operation of the gas turbine is made possible.

In essence, in a coal fired gas turbine according to the present invention, 80 - 90% of an ash content in coal is removed through a slag port in a molten state in the slagging combustor, and remaining 10 - 20% of the ash content contained in a combustion gas is removed by the mist separator, and then the combustion gas is introduced to the gas turbine section.

In addition, since a partition is provided between the gas turbine section and the air compressor, an exhaust gas discharged from the gas turbine section would not enter the air compressor.

The coal fired gas turbine according to the present invention provides the following advantages:

a) Since pulverized coal, CWM and the like can be used as fuel, a gas turbine combined plant can be constructed, and in contrast to the fact that in the prior art the efficiency was 35 - 36% (HHV (High Heat Value) reference), according to the present invention the efficiency is improved to about 43%, and therefore, a highly efficient coal fired plant can be realized.

b) By integrally constructing a coal fired furnace serving as a slagging combustor for burning pulverized coal jointly with a gas turbine, great reduction of cost for a coal fired combined system can be realized.

The above-mentioned and other objects, features and advantages of the present invention will become more apparent by reference to the following description of one preferred embodiment of the invention taken in conjunction with the drawings.

BRIEF DESCRIPTION OF THE DRAWINGS:

In the accompanying drawings:

Fig. 1 is a cross-section view showing a construction of a fuel fired gas turbine according to the present invention;

Fig. 2 is a cross-section view taken along line II-II in Fig. 1;

Fig. 3a is a front view of a radial blade in a mist separator; and

Fig. 3b is a cross-section view taken along line IIIb-IIIb in Fig. 3a.

## DESCRIPTION OF THE PREFERRED EMBODIMENT:

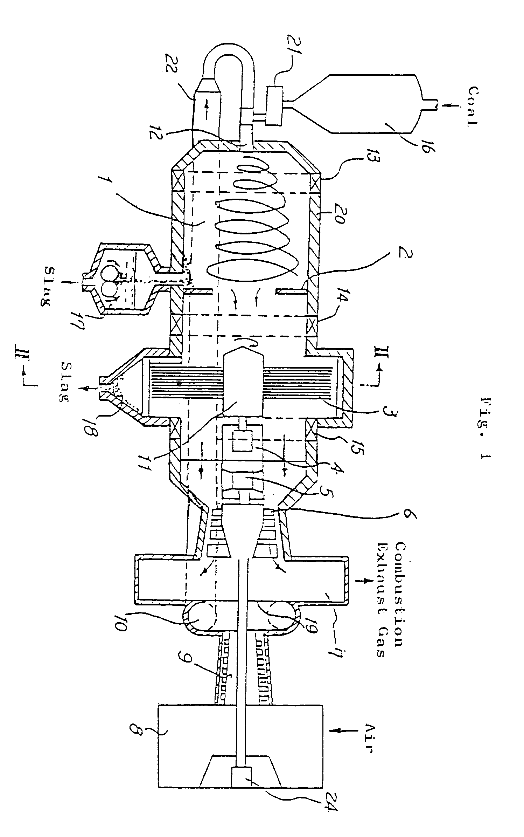

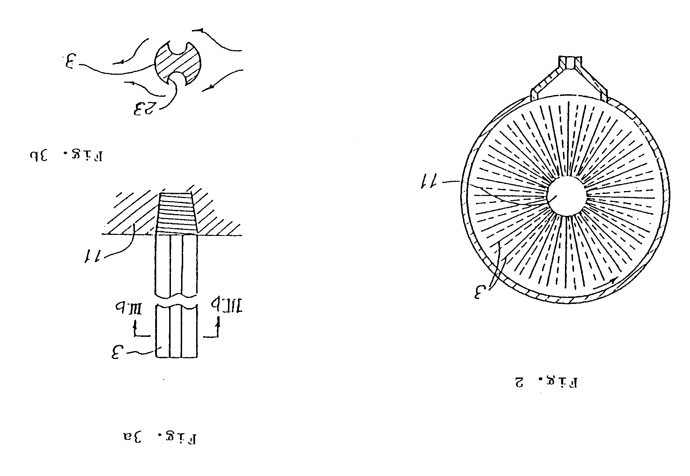

Now one preferred embodiment of the present invention will be described in greater detail with reference to Figs. 1, 2, 3a and 3b.

Referring to Fig. 1 which shows a general construction of a coal fired gas turbine according to the present invention, a combustion air is introduced through an air intake hole 8, and passed through an air compressor 9 to be pressurized up to 10 - 15 ata, then the compressed air flows from a compressed air delivery port 10 through a high pressure air feed pipe 22, and some parts of the compressed air are fed to a slagging combustor 1 and an outlet of a mist separator through a swirling secondary air introducing hole 13, a secondary air introducing hole 14 and a tertiary air introducing hole 15, respectively. The remaining air conveys pulverized coal fed through a pulverized coal bin 16 and a pulverized coal feeder 21, and it is introduced through a pulverized coal burner 12 to a slagging combustor 1. While the illustrated slagging combustor is of horizontal type, it is possible to form the slagging combustor 1 in a vertical type, and in the case of the vertical type, a lining structure of refractory material becomes easy in construction. Pulverized coal is conveyed into the combustor by primary air, the pulverized coal thrown into the combustor burns furiously as being made to swirl by swirling secondary air blown into the combustor at a high speed of about 90 - 100 m/sec in the tangential direction of the combustor inner cylinder, hence a burning atmosphere temperature reaches 1500 - 1600° C or higher, an ash content ($SiO_2$, $Al_2O_3$, MgO, CaO, $Fe_2O_3$, etc.) in the pulverized coal becomes a molten state and flows along a wall surface of the combustor, and it is discharged by 80 - 90% through a slag extraction hole into a molten slag reservoir 17. The remaining ash content of 10 - 20% flows out of the slagging combustor 1 in a gas state or in a mist state jointly with a combustion gas, then after it has reburnt or mixed with secondary air introduced through a secondary air introducing hole 14, it is controlled to be held at an appropriate temperature of about 1100° C or lower (that is, it is held at a temperature of about 1100° C or lower where all the ash content becomes a mist state or a fly ash state.), and during the period when it passes through mist fly ash separator blades jointly with the combustion gas, it adheres to the blades in a mist state, then passes through molten mist introducing grooves 23 (Fig. 3b) engraved in the rotating blade, thus is gradually led to the outside by a centrifugal force, and eventually discharged to a mist slag discharge hopper 18.

The mist fly ash separator 3 is composed of a blade group consisting of a large number of blades disposed radially on a rotor 11 that is rotated by a separator drive motor 4, thus ash mist, fly ash, etc. in the combustion gas strike against and adhere to these blades, and they are removed almost perfectly through the above-mentioned process. It is to be noted that the mist fly ash separator could be formed of porous ceramic discs superposed in multiple, and a rotational speed of the ceramic discs is about 100 rpm. What is most important in this process is to maintain the combustion gas temperature at an appropriate value of 1100° C or lower and to control in such manner that the ash mist and fly ash may flow always at a constant rate to the outside along the blades due to a centrifugal force, and if these cannot be achieved well, the blades would be blocked and continuous operation would become impossible. The combustion gas passed through the mist fly ash separator blades 3 would mix with air fed through the tertiary air introducing hole 15 and would have its temperature lowered further, hence it would not excessively heat up the separator drive motor 4 and the gas turbine bearing 6, and it is introduced at a predetermined temperature to the gas turbine main body 6 and further led to a combustion exhaust gas port 7. In addition, by a partition 19 disposed between the combustion exhaust gas port 7 of the gas turbine section and the air compressor 9, the combustion exhaust gas of the gas turbine section is prevented from being introduced to the air compressor 9. Furthermore, the slagging combustor 1, the mist fly ash separator 3, the gas turbine section, and the air compressor 9 are constructed in an integral form as illustrated in Fig. 1, and therefore, great reduction a cost for the entire system can be realized.

## Claims

1.  A coal-fired gas turbine comprising:
    a coal-fired furnace, a mist separator section (3), a gas turbine section (6) and an air compressor section (9) having an outlet (10), sequentially disposed in the foregoing order in the coal-fired gas turbine;
    said coal-fired furnace being a slag combustor (1) for generating a thermal load capable of breaking down coal, said slag combustor (1) including an inlet and an air introducing hole (13) open at said inlet and to the outlet of said air compressor section (9);

molten slag extraction means (17) connected to said slag combustor (1) for extracting slag from said combustor (1);

said mist separator section (3) having an inlet open to said combustion furnace;

an air introducing hole (14) open at the inlet of said mist separator section (3) for introducing air into said inlet that maintains combustion gas passing from said slag combustor (1) to said mist separator section (3) at a predetermined temperature;

said air compressor section (9) having an outlet (10) open to said air introducing hole (13);

an air compressor (9) disposed in said air compressor section (9) for compressing air passing to the outlet of said air compressor section (9);

a common shaft (24) extending between and connected to the main body of said turbine and said air compressor (9); and

a partition (19) disposed between said gas turbine section (6) and said air compressor section (9) for preventing the communication of combustion gas driving said main body of said gas turbine with air compressed by said air compressor (9);

characterized in that

said mist separator section (3) is comprising

a rotor (11) having a plurality of separator blades (3) extending radially therefrom disposed in said separator section (3) and rotatable for removing ash from mist containing the ash and combustion gas introduced into said mist separator section (3) from said slag combustor (1);

drive means (4) operatively connected to said rotor (11) for rotating said rotor (11);

a main body of a gas turbine disposed in said gas turbine section (6), and said gas turbine section (6) including an inlet and an air introducing hole (15) open to the inlet of said gas turbine section (6) and to the outlet of said air compressor section (9).

2. A coal-fired gas turbine as claimed in claim 1, wherein each of said separator blades (3) has a groove (23) extending therealong in a direction that is radial with respect to said rotor (11).

3. A coal-fired gas turbine as set forth in claim 1, wherein said mist separator (3) is formed of rotating porous ceramic discs superposed in multiple.

4. A coal-fired gas turbine as claimed in claim 1, wherein the inlet of said mist separator section (3) is integral with and extends directly from said coal-fired furnace, said gas turbine section (6) includes an inlet integral with and extending directly from said mist separator section (3) a combustion gas introduction section is integral with and extends directly between said mist separator section (3) and said gas turbine section (6), and said air compressor (9) section is integral with and extends directly from said gas turbine section (6).

## Patentansprüche

1. Kohlebefeuerte Gasturbine, umfassend:

einen kohlebefeuerten Ofen, einen Dunstabscheiderabschnitt (3), einen Gasturbinenabschnitt (6) und einen Luftverdichterabschnitt (9) mit einem Auslaß (10), die in der angegebenen Reihenfolge aufeinanderfolgend in der kohlebefeuerten Gasturbine angeordnet sind,

wobei der kohlebefeuerte Ofen ein Verschlakkungsbrenner (1) zum Erzeugen einer für das Spalten von Kohle geeigneten thermischen Beschickung ist und der Verschlackungsbrenner (1) einen Einlaß und eine sich am Einlaß und zum Auslaß des Luftverdichterabschnitts (9) öffnende Lufteinführöffnung (13) aufweist,

eine mit dem Verschlackungsbrenner (1) verbundene Schmelzschlacke-Abführeinrichtung (17) zum Abführen von Schlacke aus dem Brenner (1),

wobei der Dunstabscheiderabschnitt (3) einen sich zum Verbrennungsofen öffnenden Einlaß aufweist,

eine sich am Einlaß des Dunstabscheiderabschnitts (3) öffnende Lufteinführöffnung (14), um in den Einlaß Luft einzuführen, welche vom Verschlackungsbrenner (1) zum Dunstabscheiderabschnitt (3) strömendes Verbrennungsgas auf einer vorbestimmten Temperatur hält,

wobei der Luftverdichterabschnitt (9) einen sich zur Lufteinführöffnung (13) öffnenden Auslaß (10) aufweist,

einen im Luftverdichterabschnitt (9) angeordneten Luftverdichter (9) zum Verdichten der zum Auslaß des Luftverdichterabschnitts (9) strömenden Luft,

eine sich zwischen dem Hauptkörper der Turbine und dem Luftverdichter (9) erstreckende und damit verbundene gemeinsame Welle (24) sowie

eine zwischen dem Gasturbinenabschnitt (6) und dem Luftverdichterabschnitt (9) angeordnete Trennwand (19) zur Verhinderung eines Kommunizierens des den Hauptkörper der Gasturbine antreibenden Verbrennungsgases mit der durch den Luftverdichter (9) verdichteten Luft,

dadurch gekennzeichnet, daß
der Dunstabscheiderabschnitt (3) umfaßt:
einen Rotor (11) mit einer Vielzahl von Abscheiderflügeln (3), die im Abscheiderabschnitt (3) radial vom Rotor abstehen und drehbar sind, um Asche von dem die Asche enthaltenden Dunst und aus dem Verschlackungsbrenner (1) in den Dunstabscheiderabschnitt (3) eingeführten Verbrennungsgas zu beseitigen,
eine wirkungsmäßig mit dem Rotor (11) verbundene Antriebseinheit (4) zum Drehen des Rotors (11),
einen im Gasturbinenabschnitt (6) angeordneten Hauptkörper einer Gasturbine, wobei der Gasturbinenabschnitt (6) einen Einlaß und eine Lufteinführöffnung (15) aufweist, die sich zum Einlaß des Gasturbinenabschnitts (6) und zum Auslaß des Luftverdichterabschnitts (9) öffnet.

2. Kohlebefeuerte Gasturbine nach Anspruch 1, bei welcher jeder Abscheiderflügel (3) eine Nut oder Rille (23) aufweist, die an ihm längs einer Richtung verläuft, welche in bezug auf den Rotor (11) radial liegt.

3. Kohlebefeuerte Gasturbine nach Anspruch 1, bei welcher der Dunstabscheider (3) aus rotierenden, porösen Keramikscheiben, die in einer Vielzahl übereinanderliegend angeordnet sind, geformt ist.

4. Kohlebefeuerte Gasturbine nach Anspruch 1, bei welcher der Einlaß des Dunstabscheiderabschnitts (3) materialeinheitlich mit dem kohlebefeuerten Ofen ausgebildet ist und unmittelbar von diesem abgeht, der Gasturbinenabschnitt (6) einen mit dem Dunstabscheiderabschnitt (3) materialeinheitlich ausgebildeten und unmittelbar von diesem abgehenden Einlaß aufweist, ein Verbrennungsgas-Einführabschnitt materialeinheitlich mit dem Dunstabscheiderabschnitt (3) und dem Gasturbinenabschnitt (6) ausgebildet ist und unmittelbar zwischen diesen verläuft und der Luftverdichterabschnitt (9) materialeinheitlich mit dem Gasturbinenabschnitt (6) ausgebildet ist und unmittelbar von diesem abgeht.

**Revendications**

1. Une turbine à gaz alimentée en charbon, comportant :
un four alimenté en charbon, une section (3) de séparation de fumées, une section (6) de turbine à gaz et une section (9) de compresseur d'air présentant une sortie (10), qui sont disposés séquentiellement dans l'ordre cidessus dans la turbine à gaz à alimentation en charbon ;
ledit four alimenté en charbon étant une chambre (1) de combustion de scories pour engendrer une charge thermique capable de détruire le charbon, ladite chambre (1) de combustion de scories comportant une entrée et un orifice (13) d'introduction d'air débouchant sur ladite entrée et sur la sortie de ladite section (9) de compresseur d'air;
des moyens (17) d'extraction des scories fondues reliés à ladite ch'ambre (1) de combustion de scories pour extraire les scories de ladite chambre de combustion (1) ;
ladite section (3) de séparateur de fumées présentant une entrée débouchant dans ledit four de combustion ;
un orifice (14) d'introduction d'air débouchant à l'entrée de ladite section (3) de séparateur de fumées pour introduire de l'air dans ladite entrée, cet air maintenant à une température prédéterminée les gaz de combustion passant de ladite chambre (1) de combustion de scories à ladite section (3) de séparateur de fumées ;
ladite section (9) de compresseur d'air présentant une sortie (10) communiquant avec ledit orifice (13) d'introduction d'air ;
un compresseur d'air (9) disposé dans ladite section (9) de compresseur d'air pour comprimer l'air allant à la sortie de ladite section (9) de compresseur d'air ;
un arbre commun (24) s'étendant entre le corps principal de ladite turbine et ledit compresseur d'air (9) et étant relié à ceux-ci ; et
une séparation (19) disposée entre ladite section (6) de turbine à gaz et ladite section (9) de compresseur d'air pour empêcher la communication des gaz de combustion entraînant ledit corps principal de ladite turbine à gaz à l'aide de l'air comprimé par ledit compresseur d'air (9) ;
caractérisée en ce que
ladite section (3) de séparateur de fumées comporte
un rotor (11) comprenant une pluralité de pales (3) de séparateur s'étendant radialement à partir de celui-ci et disposées dans ladite section (3) de séparateur en pouvant tourner pour extraire les cendres des fumées contenant les cendres et les gaz de combustion introduits dans ladite section (3) de séparateur de fumées en provenance de la chambre (1) de combustion de scories ;
des moyens d'entraînement (4) reliés opérativement audit rotor (11) pour faire tourner ledit rotor (11) ;
un corps principal de turbine à gaz disposé dans ladite section (6) de turbine à gaz, ladite section (6) de turbine à gaz comportant une entrée et un orifice (15) d'introduction d'air débouchant sur l'entrée de ladite section (6) de turbine à gaz et sur la sortie de ladite section (9) de compresseur d'air.

2. Une turbine à gaz alimentée en charbon telle que revendiquée dans la revendication 1, dans laquelle chacune desdites pales de séparation (3) présente une gorge (23) s'étendant le long de celle-ci dans une direction qui est radiale par rapport audit rotor (11).

3. Une turbine à gaz alimentée en charbon selon la revendication 1, dans laquelle ledit séparateur de fumées (3) est constitué par des disques tournants poreux en matière céramique superposés de manière multiple.

4. Une turbine à gaz alimentée en charbon telle que revendiquée dans la revendication 1, dans laquelle l'entrée de ladite section (3) de séparateur de fumées forme un ensemble unique avec ledit four à alimentation en charbon, et s'étend directement à partir de celui-ci, ladite section (6) de turbine à gaz comporte une entrée d'une seule pièce avec ladite section (3) de séparateur de fumées et s'étend directement à partir de celle-ci, une section d'introduction des gaz de combustion est d'une seule pièce avec ladite section (3) de séparateur de fumées et ladite section (6) de turbine à gaz en s'étendant directement à partir de celles-ci, et ladite section (9) de compresseur d'air forme un ensemble unique avec ladite section (6) de turbine à gaz en s'étendant directement à partir de celle-ci.

Fig. 1

Fig. 2

Fig. 3a

Fig. 3b